# EUROPEAN PATENT APPLICATION

(11) **EP 1 174 805 A2**
(43) Date of publication of application: **23.01.2002**
(21) Application number: 00123948.2
(22) Date of filing: 03.11.2000
(51) Int. Cl.: G06F 17/60

(54) **Multimedia I/O interface device**

(30) Priority: 30.06.2000 US 608742
(71) Applicant: Xybernaut Corporation, Fairfax, Virginia 22033 (US)
(72) Inventor: Newman, Edward G., Fairfax Station, Virginia 22039 (US)
(74) Representative: Rudolph, Wolfgang, Dipl.-Ing.

(57) **Abstract**

A system, a method and an apparatus is described for use at entertainment events which allows users to selectively and/or automatically view and listen to content related to the event itself and to order goods and/or services and to make hospitality arrangements. It incorporates a data gateway at or accessible to the event and a plurality of interface devices for use by attendees. The devices provide the attendees with a menu of choices of deliverable content indirectly or directly related to the event including but not limited to statistics and information, live and delayed video and audio feeds, closed circuit audio and video content, goods and services available for purchase, information on placing legal bets, and polling or voting. An account is established for the user prior to or when he arrives at the event thus enabling the system to uniquely identify him and his location and to personalize the content. This further facilitates an anonymous, cash-less transaction scheme for billing of goods and services purchased through the device while attending the event.

## Description

The invention relates to a method according to the preamble of claim 1, a system and apparatus for attendees of media and sporting events according to the preamble of claims 13, 14, 15 and 44 respectively.

The widespread growth of users on the Internet and their ever increasing demand for content has created an environment in which information on nearly any topic is available at a keystroke or can be easily requested via other activation means. The entertainment industry, in particular sports and media companies, have been pioneers on the Internet in providing detailed information about their respective organizations online. For example, virtually every major sports team and sports industry has its own web site which is promoted in advertisements and at the events themselves. Interested fans can log on to espn.com or majorleaguebaseball.com to quench their insatiable appetite for information relevant to their favorite team or sport. Things such as individual and team statistics, schedules, video and audio clips, and highlights of events are routinely available. However, when fans attend an event such as a sporting or entertainment event they are usually unable to access this kind of information and not able to access information which may be available local to the event itself in real time or historically. Hard copy programs are usually sold at the event which contain some of this kind of information, but they are limited by size and don't provide individualized information. Anyone who has ever been to a professional sporting event has undoubtedly seen fans with their own TV's, radios, and scanners so that they can listen to the commentary and see the replays in addition to what they can see with their eyes and hear with their ears on the field or at the event. The reason for this is that the coverage on TV and on the radio provides more information than one can get at the event itself watching it live and listening only to the public address system and looking at the scoreboards and/or event action itself. The cameras and microphones on the field can generally provide higher fidelity coverage then what one can achieve while sitting in their seat. However, this suffers from the limitation that the viewer is not in control of this information; he merely watches and listens to whatever is available over the public broadcast network. Further, if the viewer is visually impaired or in a poor location, he may not be capable or able to view such a scoreboard or monitor. "Entertainment" events will mean throughout this disclosure and claims, sporting events, media events, or any other suitable event. This increasing demand for content has also driven a demand for portability. Initially, the only option for consumers who desired remote data access was laptops with wired and then cellular modems. Now, PDAs and cellular phones are migrating towards a wireless communications platform which provides some limited Internet access and email capability, but these devices suffer from their inherent limitations of simple hardware and operating systems insufficient to deliver robust multimedia content. These devices also lack a standardized OS such as Windows ® 95, 2000, NT, Linux or Unix, or computer applications running thereon which may be required to deliver robust content. However, wearable computers bridge the gap between true portability and rigor. They are fully functional Windows ® based PCs which can provide all the features of a state of the art laptop computer while allowing the user to operate it hands free without having to hold it or rest it on a surface. Newman et al, US 5,844,824 teaches such a wearable "hands-free" computer. "Hands-free" throughout the present disclosure and claims will refer to activation means described and defined in U.S. 5,844,824. The computer is described as a body worn, hands free computer system which does not rely upon a keyboard input or activation apparatus, but rather has various activation means all of which are hands free. It also can use a built in mouse for activation and includes a head or wrist mounted display or even neck worn display. Such a computer, if in communication with a wireless data network, will allow users to access the network from anywhere within the physical volume of influence of the wireless network. This has created the opportunity for countless new wireless applications. However, in the context of sporting or media events, where the equipment is rented or unable to be supported, these wearable computers suffer from the problem or limitation that their operating system and hardware platform are not streamlined for a specific purpose. It is designed to be flexible to accommodate a variety of potential applications which in most cases is a feature. Whereas what is needed in the present context is an operating system and optional application software and data combined with hardware that is inherently streamlined and stable, an operating system and/or computing environment which requires no configuration by the user nor which contains any unnecessary content or code. By marrying this wearable computing platform with proprietary content delivery service and a streamlined reliable operating environment and hardware platform, the viewing and listening experience of event attendees can be significantly enhanced.

Thus, there exists a need for attendees at such events to be able to access event specific information while attending the event using a wearable computer or I/O interface device which will automatically connect to a local wireless gateway at the event and which provides specific functionality and requires only minimal or no configuration by its users.

It is therefore an object of this invention to provide a method and system which incorporates a wearable computer/computer system or I/O interface device devoid of the above noted disadvantages and for use at sports or other media or entertainment events, to provide the system for selectively and/or automatically viewing and or listening to and/or reacting to information about an event while attending it, and/or for viewing and listening to closed circuit broadcasts and/or similar information broadcasts which are related to an event, for receiving information/data about an event, while attending the event, for securely ordering goods and services while attending an event, for making transportation or hospitality arrangements related to an event while attending an event.

An additional object of this invention is to provide a system for selectively viewing information from different camera angles from live or nearly live camera feeds at an event mentioned above; and to provide a system and device which permits attendees at an event to communicate with one another; for listening to live closed circuit audio content; for allowing attendees of events to participate in surveys or polling while attending the event; and/or to place secure gambling bets related to the particular event.

An additional object of this invention is to provide an apparatus/a device which runs an operating system and application software and possesses a hardware configuration which is optimized for remote data transmission and the specific functionality necessary to provide content to attendees with no configuration required by the user.

The main features of the solution of the objects proposed by the invention are described in the characterizing part of claim 1, 13, 14 and 44.

Further variations on the solution to the problems are characterized by claims 2 to 12 and 15 to 43; 45.

Further details of the solution of the object of the invention are described in the detailed description of the embodiments as follows.

These and other objects of this invention are accomplished generally, by a user supported computer or I/O interface device for use at "Entertainment Event(s)" including media or sporting events which allows users to view proprietary closed circuit content on a live and demand driven basis. This is facilitated by a wireless data gateway at the event or dedicated to the event which is in communication with the plurality of individual attendee devices. "User supported" includes wearable computers or any other computer supported by a person.

The invention is essentially a method and system which incorporates a wearable computer or I/O interface device for use at sporting or other media or entertainment events and a private or public central wired or wireless data access gateway. Such wearable computers are well known in the computer arts. Newman, US 5,844,824 teaches such a computer. As earlier noted, the disclosure of that patent and U.S. patent 5,305,244 is hereby incorporated by reference in the present disclosure. The computer has a head mounted or other display and a CPU for processing commands. The invention allows users to selectively, collectively, automatically or a combination thereof, view and listen to content about the event, view various live camera feeds, order goods and services related to the event, to look up specific information statistics, etc, to interact with the information received such as to vote or participate in polls, or to place bets. It also will allow them to make transportation or other hospitality reservations for during or after an event. Additionally, it will allow attendees to purchase food or goods related to the event and have them delivered to their location at the event or to another location for pick up.

The actual system topology can be implemented in one of several embodiments. In one embodiment, the device used by the attendees is a fully functional computer like that disclosed in Newman, US 5,844,824. In this embodiment, the functionality is essentially the same except that the majority of the computing power resides with the attendee. He has at his disposal a fully functional computer with display. The computer communicates either wired or wirelessly with a server located at the event stadium or remote to it. The server serves as a intranet and internet gateway for the devices allowing the users to view and hear content that is specific to the event that is not or may not be available to those outside the event or those without such devices, but also allowing users to connect to the web if they desire. In this manner, users can check their email, obtain content from the web or obtain information specific or tertiary to the event. Because the device is a fully functional computer, it can be equipped with a USB or other port so that users could plug in their own digital cameras/recorders or optionally rented or provided ones and send nearly live pictures and audio via email to others at or not at the event.

In another embodiment, the information server and the processing power can be centralized. This type of configuration is known in the art as A.S.P. or application service provider. In this manner, the attendee using the equipment merely has an I/O interface device with limited computational power. This interface provides him with audio and visual feedback and facilitates textual and/or audio and/or other inputs. However, all major processing is done by the central server/processor. The device itself will have a template stored for handling input. The user will select the specific information type much like the interface on a web portal and the command to retrieve the information will be sent to the central computer. The central computer can have all the data stored locally, and/or remotely, and/or it can simply be connected to the world wide web. The template will have categories of available information such as audio feeds, video feeds, hospitality information, stadium information, player/team information, shopping information, and any other information for which there is a demand. Communication between the device and the central computer is facilitated by one of many well known wired or wireless communication protocols. Wireless LAN, cellular, GSM, wide band CDMA, IR, and even analog TV transmission are all potential protocols. This embodiment minimizes the cost of the actual devices used or worn by the attendees as they need only have an I/O interface and a power supply.

In yet an additional embodiment, the device could be built into the attendee's seat, or in the seat in front of him, or in a nearby structure. In this manner, the user could activate the device when he arrives at his designated or desired location by sliding his credit card or accepted ID through an integral or attached reader. Alternatively, he could activate the device by punching in a pin code, by depressing his thumb or finger on an integral or attached finger print or retinal scanner, or other electronic or bio-metric identification means. In this case the attendee, when he purchases his ticket, or at another time, establishes a billing account that is associated with a unique pin number, or with his finger print. It may be advantageous to have the device built into the seat or nearby structure so that user's don't have to actually carry or wear the equipment, the equipment will be protected from drops, and high speed, secure communication can be wired since the device's location is fixed.

In yet another embodiment, the device could be hand held or wrist worn flat panel touch screen display with either an integral or connected computer. This device may optionally be daylight readable so as to afford easy viewability at outdoor events. The device will utilize either touch screen, attached stylus, integral pointing device, speech, or other activation means. The user will be able to hold the device with one hand, rest it on his lap or knees or a seat while sitting, or wear it on his wrist or around his neck, or stand it near by. Alternatively, the device could be a head mounted display and interface device.

The use of the system is best illustrated by example. An attendee arrives at the event and rents or activates the device. He may use a credit card to procure the device. The device, when it connects to the network, transmits a unique code which is associated with the person, his seat number, and his credit card or other billable account number. If the device is supported by the user he will carry it with him to his seat location. If it is built into the seat he may be given a PIN number to activate it or use his own credit card or provide sample bio-metric input to activate it. This scheme may obviate the need for the user to enter any information identifying himself, his location, or his credit card into the device if he wishes to use it to order food/beverages, goods/services, or to make other transportation or hospitality arrangements. Because this network may be a private local network and no credit information is being transmitted, it is inherently more secure then other transaction methods. Additionally, this will allow for a novel cash-less transaction method. Because a billing account is set up in advance, or at the time of rental, and a unique wireless connection is established with the server, any purchases for food/beverages, goods or services can be billed directly to the account which is secured by the attendee's credit card or personal or company account. This will also allow for personalization of the interface. The device will have an integral or attached power supply to provide power for the duration of the event continuously or can be refreshed through a replaceable means such as battery exchange. Alternatively, power could be supplied or refreshed by a connector integral to the seat of the attendee or nearby. Once powered on, the device will automatically establish a connection with the central server computer. This will happen regardless of whether the device is an I/O interface device or a fully functional computer. The user can begin to explore the menu of options available to him. If the event is a football game, for instance, he could listen to a closed circuit radio broadcast or watch a television broadcast, look up the starting line up, get information on individual players, review previous games, listen to pre-game interviews, determine the point spread, place bets on the outcome or other facets of the game, etc. There could be a special broadcast channel available for free, or for an extra fee, carrying such value added information for users of the system. Alternatively, the user could order food and/or beverages to be delivered to his seat or standing area from a hospitality menu. He could also order merchandise such as apparel or other gear which is related to the teams playing or the sport in general. Because the central server is able to identify the person based on the code transmitted by his specific device and to correlate that with the data provided when the attendee rents the device, it may not be necessary for him to enter any information identifying himself or his location. The person receiving the order for the food or merchandise will automatically know who has placed an order and where they are located. An associative database at the server will provide this information to employees at the event when a code identifying a specific attendee is received. It may also be desirable for the sake of efficiency to place several stations around the event and to route the request to the station closest to the seat of the attendee requesting the good or service.

Alternatively, the attendee could pick up items purchased at the event after the event at a central location, or when they return the I/O interface device, thus preventing them from having to secure said items while watching or attending event. Or the merchandise may be sent to a location specified by the customer after the event.

Once the game begins, the headset speaker on the device could broadcast the output from a continuous field microphone so that regardless of where the user is sitting he can listen to the action on the field, much like if he were watching it at home on television. In this manner he could realize one of the benefits of watching the game at home which is better audio and video coverage, while still getting to see the action live. It might be advantageous to make this feature persistent so that regardless of what the user is navigating through on his computer or I/O device, he has continuous audio and possibly video feedback of what is going on in the game or at another game or related event elsewhere so that he doesn't miss any action. The user could also select from various camera views to watch the live video streams and individual replays of the event. In this manner, even those who are sitting in more distant seats or have left the direct viewing area can have a good view of the action on the field. If the event is car race, for instance a NASCAR event, the audio output to the wearer of the device could be the radio channel of the driver and pit crew for one of the racing teams present, similar to scanner's available today at car races. This would allow the user to selectively listen in on his favorite racing teams conversation. Alternatively, he could listen to a live radio broadcast discussing the race which is broadcast locally only to users of the device. Additionally, he could download telemetry data from his favorite racing team. In this manner, he could monitor the car's performance, view driver perspective (tap into the dash mounted camera), and listen to communication between the pit crew and driver.

At any time during the event, the attendee can use the system to make hospitality reservations for during or after the event. For instance, if the user needs to reserve a limousine for after the event or if he would like to make a dinner reservation in a restaurant or club at the stadium, he can do so using the device.

The operating system for the actual user devices will need to be optimized for simplicity and reliability. A specific function set including, but not limited to, communications, data streaming and querying, and ordering of goods and services, are the only functions necessary. The software should function as automatically as is possible and require minimal if any configuration by the user. Once it is rented, or provided as part of the admission cost, or purchased under the auspices of event management, and activated by employees at the event, it automatically connects to the server and transmits a unique code identifying itself and confirming the specific user account. The device itself will be as simple as possible with few or no peripheral devices requiring software support. The operating system will preferably be embedded such as in an automated teller machine so as to insure stability. Because attendees will be taking them to their seats or using them at or near their seats, and the events are only for a limited period of time it is imperative that the devices function properly. It would not be cost effective or feasible to be running a current PC based Windows ® 95, 98, NT or 2000 platforms as this might necessitate sending out technicians to trouble shoot software problems. These operating systems in their current forms are too complex and contain unnecessary functionality for this specific use application. Thus, the software should be designed specifically for this hardware platform and application and be as streamlined as possible to perform the specific functions available at the event.

The hardware should also be streamlined to include only components which are essential to the limited function set of the device. Preferably the device will not contain a hard disk, but rather ROM or flash based storage. By embedding the OS in the hardware and eliminating read/writes to the hard disk, overall stability of the system will be increased, as will the useful operating cycle. Ideally, the hardware will perform much like a cellular phone, which is essentially flawless. A single button or command will cause the device to re-establish its connection with the server if for some reason this connection is broken.

The preferred and optimumly preferred embodiments of the present invention have been described herein but it is to be understood that numerous modifications and ramifications may be made without departing from the spirit and scope of this invention.

## Claims

1. Method of delivering content to attendees of an Entertainment event, **characterized by** steps of
establishing an account for an attendee before or when he arrives at said event,
giving an interface device to the attendee at the event or before the event,
establishing communication between said device and a central data gateway,
providing the attendee a menu of choices viewable on said device whereby the user can select items from the menu by an activation means integral to said device, and
means for delivering video and audio content to the attendee's interface device.

2. Method of claim 1 wherein said interface device is a wearable computer.

3. Method of claim 1 wherein said interface device is an I/O device which communicates with an application service provider.

4. Method of claim 1 wherein said interface device is capable of delivering audio and video information.

5. Method of claim 1 wherein said communication is two way wired or wireless communication.

6. Method of claim 1 wherein said choices include video.

7. Method of claim 1 wherein said choice include audio.

8. Method of claim 1 wherein said choices include textual or pictoral information or a combination thereof.

9. Method of claim 1 wherein said choices include placing legal bets.

10. Method of claim 1 wherein said choices include polling or voting.

11. Method of claim 1 wherein said interface devices is a hands-free activated user-supported computer.

12. The method of claim 1, wherein attendees can communicate with other attendees possessing similar devices.

13. System for use by attendees for accessing a private information gateway at Entertainment events, **characterized by**
means for selectively delivering multimedia content to attendees of said events;
means for attendees to selectively view and listen to said content while attending said events;
means for allowing users to order goods and services related to said event in a suitable manner including having and not having to enter any specific information including information about themselves and their payment instruments;
means for delivering said goods and services to the seat or location of the attendees; and
means for allowing attendees to receive said goods and services at any designated time including when they exit said event or have them delivered to a specified location local and/or remote to the event.

14. Apparatus for facilitating viewing and interacting with value added content by attendees of media and sporting events, **characterized by**
a data gateway at or available to the event; and
a plurality of attendee user interface devices.

15. Apparatus of claim 14 wherein said content includes live and delayed audio.

16. Apparatus of claim 14 wherein said gateway is a wireless or a wired data gateway.

17. Apparatus of claim 14 wherein said content includes legal gambling information and bet placement information about said events.

18. Apparatus of claim 14 wherein said content includes voting or polling content.

19. The apparatus of claim 14 wherein said content includes pushed content.

20. Apparatus of claim 14 wherein said content includes pulled content.

21. Apparatus of claim 14 wherein said attendees can selectively choose from a menu of content.

22. Apparatus of claim 14 wherein said content includes data and information related to said events.

23. Apparatus of claim 14 wherein said interface devices are hands-free user-supported computers.

24. Apparatus of claim 14 wherein said content includes a menu of goods and services available for purchase.

25. Apparatus of claim 24 wherein said goods and services can be purchased in a cash-less fashion.

26. Apparatus of claim 24, **characterized in,**
**that** said goods and services can be delivered to the seat location of the attendees at the events with or without having to enter their location, their identity or their billing information into the interface device.

27. Apparatus of claim 24 wherein said goods and services can be picked up at a central location either after or during the event.

28. Apparatus of claim 14 wherein said user interface devices are mobile wearable computers.

29. Apparatus of claim 14 wherein said user interface devices are I/O interface devices.

30. Apparatus of claim 14 wherein said user interface devices do not require configuration by the attendee.

31. Apparatus of claim 14 wherein said interface device requires minimal configuration by the attendee.

32. Apparatus of claim 14 wherein said user interface devices transmit a unique signal to the closed circuit data gateway which identifies the attendee and his seat number or his location.

33. Apparatus of claim 14 wherein said devices maintain an automatic and persistent connection to said data gateway while attending said events.

34. Apparatus of claim 24, **characterized in,**
**that** said goods and services can be picked up by the attendee when he returns the interface device and/or at another location specified by the attendee.

35. Apparatus of claim 14 wherein the device contains ist own integral or attached power supply.

36. Apparatus of claim 14 wherein the device receives power from a connector in a seat occupied by the attendee or other nearby structure.

37. Apparatus of claim 14 wherein the device is held or supported by the attendee.

38. Apparatus of claim 14 wherein the device incorporates a head mounted display.

39. Apparatus of claim 14 wherein the device incorporates a neck worn display.

40. Apparatus of claim 14 wherein the device incorporates a wrist mounted display.

41. Apparatus of claim 14, **characterized in, that** the operating system of the device minimizes the amount of required input by the attendee to the extent that he only has to select links or buttons to view desired content, listen to desired content, order goods/services, and to make arrangements for other hospitality services.

42. Apparatus of claim 14 wherein the device is operable to display one or more of a plurality of camera views at the events.

43. Apparatus of claim 14 wherein the device is operable to display a window showing video and/or audio coverage of another non-local event.

44. Method of delivering content to attendees of sporting and media events, **characterized by** steps of
establishing an account for an attendee before or when he arrives at an event;
activating an interface device;
establishing communication between the interface device and a central data gateway;
providing the attendee a menu of choices viewable on said device whereby the user can select items from the menu by an activation means integral to said device; and
selectively and/or automatically delivering video and audio content to the attendee's interface device.

45. Method of claim 44 wherein the interface device is mounted to the attendee's seat or to a seat in front of or to a structure near the attendee's seat.
